# EUROPÄISCHE PATENTSCHRIFT

(11) **EP 3 867 715 B1**
(45) Veröffentlichungstag und Bekanntmachung des Hinweises auf die Patenterteilung: **17.09.2025**
(21) Anmeldenummer: 19786312.9
(22) Anmeldetag: 08.10.2019
(51) Int. Cl.: G05B 19/4097, B23K 26/38, B23K 37/04, G06Q 10/04

(54) **FERTIGUNGSSYSTEM UND VERFAHREN ZUM SCHACHTELN VON TEILRÄUMEN FÜR EINE ANSTEUERUNG EINES SCHNEIDPROZESSES**
PRODUCTION SYSTEM AND METHOD FOR NESTING SUB-SPACES FOR CONTROL OF A CUTTING PROCESS
SYSTÈME DE FABRICATION ET PROCÉDÉ D'IMBRICATION DE SOUS-ESPACES POUR UNE COMMANDE D'UN PROCESSUS DE DÉCOUPE

(30) Priorität: 19.10.2018 DE 102018126069
(43) Veröffentlichungstag der Anmeldung: 25.08.2021
(73) Patentinhaber: TRUMPF Werkzeugmaschinen SE + Co. KG, 71254 Ditzingen (DE)
(72) Erfinder: FISCHER, Stephan, 76227 Karlsruhe (DE)
(74) Vertreter: Trumpf Patentabteilung
(86) Internationale Anmeldenummer: PCT/EP2019/077162
(87) Internationale Veröffentlichungsnummer: WO 2020/078765

(56) Entgegenhaltungen:
- VIJAY ANAND K. ET AL: "Heuristic and genetic approach for nesting of two-dimensional rectangular shaped parts with common cutting edge concept for laser cutting and profile blanking processes", COMPUTERS & INDUSTRIAL ENGINEERING, vol. 80, 1 February 2015 (2015-02-01), AMSTERDAM, NL, pages 111 - 124, XP093080468, ISSN: 0360-8352, DOI: 10.1016/j.cie.2014.11.018
- S. UMAR SHERIF ET AL: "Sequential optimization approach for nesting and cutting sequence in laser cutting", JOURNAL OF MANUFACTURING SYSTEMS., vol. 33, no. 4, 1 October 2014 (2014-10-01), US, pages 624 - 638, XP055656465, ISSN: 0278-6125, DOI: 10.1016/j.jmsy.2014.05.011
- POSHYANONDA PIPATPONG ET AL: "Genetic neuro-nester", JOURNAL OF INTELLIGENT MANUFACTURING, 1 January 2004 (2004-01-01), XP055655353, Retrieved from the Internet <URL:https://link.springer.com/content/pdf/10.1023/B:JIMS.0000018033.05556.65.pdf> [retrieved on 20200107]
- E.M HOPPER: "Two-dimensional packing utilising evolutionary algorithms and other meta-heuristic methods. (BL)", 1 January 2000 (2000-01-01), XP055656305, Retrieved from the Internet <URL:https://pdfs.semanticscholar.org/552b/4a84d694061f8063cf60577940044e9a7b18.pdf> [retrieved on 20200110]
- K. RATANAPAN ET AL: "An object-based evolutionary algorithm for solving nesting problems", INTERNATIONAL JOURNAL OF PRODUCTION RESEARCH., vol. 45, no. 4, 15 February 2007 (2007-02-15), GB, pages 845 - 869, XP055655602, ISSN: 0020-7543, DOI: 10.1080/00207540600718718
- POSHYANONDA P ET AL: "Two dimensional nesting problem: artificial neural network and optimization approach", PROCEEDINGS OF THE INTERNATIONAL JOINT CONFERENCE ON NEURAL NETWORKS. (IJCNN). BALTIMORE, JUNE 7 - 11, 1992; [PROCEEDINGS OF THE INTERNATIONAL JOINT CONFERENCE ON NEURAL NETWORKS. (IJCNN)], NEW YORK, IEEE, US, vol. 4, 7 June 1992 (1992-06-07), pages 572 - 577, XP010060026, ISBN: 978-0-7803-0559-5, DOI: 10.1109/IJCNN.1992.227258

## Beschreibung

Die vorliegende Erfindung betrifft Schachtelungen von mit einer Flachbettwerkzeugmaschine zu schneidenden Werkstücken auf einer Ausgangstafel, insbesondere ein Verfahren zum Schachteln von Werkstücken entsprechenden Teilräumen für eine Ansteuerung eines Schneidprozesses einer Flachbettwerkzeugmaschine, z. B. einer Flachbett-Laserschneidmaschine. Ferner betrifft die Erfindung ein Fertigungssystem mit einer Flachbettwerkzeugmaschine.

Eine Schachtelung bezieht sich hierin auf das Positionieren von Werkstücken auf einer Rohmaterialtafel (als Ausgangstafel eines Laserschneidprozesses). In der blechverarbeitenden Industrie ist das Verschachteln von zu schneidenden Werkstücken auf einer Rohmaterialtafel Teil des Produktionsprozesses, wobei das Verschachteln zu einem spezifischen Layout von Schneidlinien führt. Hierin wird das Ergebnis eines Schachtelvorgangs (die Schachtelung) in der Planungs- und Schneidphase auch als ein Schachtelungsplan bezeichnet, gemäß dem die Werkstücke entlang der darin definierten Schneidlinien aus der Rohmaterialtafel ausgeschnitten werden.

Beim Planen von Laserschneidvorgängen kann zunächst eine geometrische Schachtelung durchgeführt würden. Für diese können Qualitätsparameter wie z. B. eine Restmaterialstegbreite, d. h., die Breite von Material, die mindestens zwischen zwei Werkstücken als Restmaterial verbleiben soll,) angeben werden. Auf der errechneten geometrischen Schachtelung kann dann für einen den Laserstrahl bereitstellenden Bearbeitungskopf eine, insbesondere möglichst gute, Verfahrsequenz bezüglich der auszuschneidenden Werkstücke für diese errechnete geometrische Schachtelung bestimmt werden. Allerdings wurde erkannt, dass alle bekannten Schachtelungsergebnisse stets noch weiter verbessert werden können, und die vorhandenen Verfahren noch nicht immer die beste Schachtelung erreichen konnten.

Aus S. UMAR SHERIF ET AL: "Sequential optimization approach for nesting and cutting sequence in laser cutting", JOURNAL OF MANUFACTURING SYSTEMS., Bd. 33, Nr. 4, 1. Oktober 2014, Seiten 624-638, ist ein Verfahren zur Erzeugung einer Schachtelung und eines Schneidplans für die Schachtelung bekannt.

Einem Aspekt dieser Offenbarung liegt die Aufgabe zugrunde, einen verbesserten Schachtelvorgang für zu schneidende Werkstücke anzugeben. Einem weiteren Aspekt dieser Offenbarung liegt die Aufgabe zugrunde, eine Prozesseffizienz, insbesondere eine Materialeffizienz und/oder Zeiteffizienz, für einen Schneidvorgang basierend auf einer entsprechend geschachtelten Anordnung von Teilräumen und einem der Schachtelung zugrunde liegenden Verfahrweg, der die Konturen der Teilräume und die Verbindungswege zwischen den Konturen der Teilräume umfasst, zu verbessern.

Zumindest eine dieser Aufgaben wird gelöst durch ein Verfahren zum Schachteln von Teilräumen für eine Ansteuerung eines Schneidprozesses mit einer Flachbettwerkzeugmaschine nach Anspruch 1 und durch ein Fertigungssystem nach Anspruch 9. Weiterbildungen sind in den Unteransprüchen angegeben.

In einem weiteren Aspekt weist ein Fertigungssystem eine Flachbettwerkzeugmaschine zum Ausschneiden von Werkstücken gemäß werkstückspezifischen Schneidkonturen aus einer Materialtafel und ein Abseitsdatenverarbeitungssystem und/oder ein lokales Fertigungssteuerungssystem auf. Diese sind dazu eingerichtet, das zuvor skizzierte Verfahren auszuführen um eine Anordnung von Teilräumen zu bestimmen. Ferner sind diese dazu eingerichtet, die Anordnung von Teilräumen als Steuersignal an die Flachbettwerkzeugmaschine auszugeben, um Werkstücke, die den Teilräumen entsprechen, aus der Materialtafel auszuschneiden.

In einigen Ausführungsformen können die Bewertungskriterien zumindest teilweise von einem Nutzer vorgegeben werden. Alternativ oder zusätzlich können sie zumindest teilweise von einer, insbesondere übergeordneten, Steuerung vorgegeben werden. Die Bewertungskriterien können Variablen umfassen, die der Anordnung von Teilräumen zugeordnet sind. Die Variablen können ein Überlappen von Teilräumen, relative Winkel von Abschnitten der Konturlinien, die einen Strahlabriss während des Schneidprozesses auslösen können, und/oder eine Zeitdauer, die dem Schneidprozess insbesondere unter Berücksichtigung von Hitzeeffekten zuzuordnen ist, charakterisieren. Die Bewertungsdaten können Bewertungen der Variablen darstellen, die den Bewertungskriterien zugeordnet sind.

Mit den hierin offenbarten Verfahren und Systemen können Verbesserungsparameter wie Materialeffizienz, Auftragsdurchlaufzeit und Qualität flexibler als bisher verbessert werden. Insbesondere weisen sie eine hohe Flexibilität bei der Anpassung an verschiedene Schachtelungsansätze auf.

In einigen Ausführungsformen umfassen die Ergebnisdaten Daten, die einen Verbesserungsparameter, insbesondere eine Materialeffizienz der Anordnung von Teilräumen, und eine Qualität der Werkstückerzeugung definieren. Eine kombinatorische Logik kann Schritte umfassen, in denen ein Vergleich, eine Differenzbildung, eine Verhältnisbildung und/oder eine Korrelationsbildung der Bewertungsdaten mit den Bewertungskriterien durchgeführt werden.

In einigen Ausführungsformen kann ein Bewertungsalgorithmus eine oder mehrere Daten-Aggregations-Routinen umfassen. Der Bewertungsalgorithmus kann dazu ausgelegt sein, den oder die Daten-Aggregations-Routine(n) mehrfach, insbesondere häufiger als zehnmal, insbesondere häufiger als hundertmal, insbesondere häufiger als tausendmal, insbesondere häufiger als zehntausendmal zu aktivieren und dabei der Daten-Aggregations-Routine zumindest einmal Ausgangsdaten einer anderen Daten-Aggregations-Routine oder derselben Daten-Aggregations-Routine, die zuvor durchlaufen wurde, als Eingangsdaten zuweisen. Der Bewertungsalgorithmus kann ferner dazu ausgelegt sein, den oder die Daten-Aggregations-Routinen immer mit Verrechnungsdaten und einem der anderen Datentypen als Eingangsdaten zu aktivieren. Ferner kann die Daten-Aggregations-Routine dazu ausgelegt sein, die Verrechnungsdaten mit einer der anderen Eingangsdaten zu verknüpfen, insbesondere zu multiplizieren.

In einigen Ausführungsformen sind die Verrechnungsdaten bestimmten Eingangsdaten der Daten-Aggregations-Routinen zugeordnet. Sie können mit diesen verknüpft, insbesondere multipliziert, werden. Die Verrechnungsdaten können Daten umfassen, die zur Verbesserung der Anordnung von geschachtelten Teilräumen, insbesondere der zugeordneten Bewertungs- und/oder Ergebnisdaten ausgebildet sind. Die Verrechnungsdaten können insbesondere Daten umfassen, die es zulassen zu bestimmen, welche Eingangsdaten eine, insbesondere möglichst positive, Auswirkung auf die Ergebnisdaten und/oder Bewertungsdaten haben. Insbesondere können die diesen zugeordneten Verrechnungsdaten dann so eingestellt werden, dass die Verknüpfung, insbesondere Multiplikationen, der den Eingangsdaten zugeordneten Verrechnungsdaten dazu führt, dass die Ausgangsdaten das Ergebnis, insbesondere möglichst positiv, beeinflussen, wodurch das Ergebnis sukzessive verbessert werden kann. Optional kann ein Einfluss der Verrechnungsdaten auf andere Bewertungsdaten und/oder Ergebnisdaten ermittelt werden.

Besonders vorteilhaft kann/können das Verfahren und/oder die Vorrichtung in einer Industriefertigung mit einer computerbasierten Fertigungssteuerung zur Bearbeitung von planen, insbesondere biegefesten Gegenständen, insbesondere Blechteilen, Verwendung finden. Für solche Gegenstände sind derartige Schachtelungsverfahren besonders vorteilhaft, da die Bewertung von sehr vielen Kriterien abhängen kann. Die Kriterien können sich teilweise gegenseitig beeinflussen und deswegen nur aufwendig bei einer automatisierten Ermittlung berechnet werden. Beispiel für solche biegefesten Gegenstände sind Tafeln aus Metall, Glas, Kunststoff, beschichtete Materialien wie z.B. beschichtete Platten aus Kunststoff, Holz, Metall, Glas etc.

Besonders vorteilhaft kann/können das Verfahren und/oder die Vorrichtung in einer Industriefertigung mit einer Laserbearbeitungsmaschine, insbesondre Laserschneidmaschine, genutzt werden.

Besonders vorteilhaft ist es, wenn die Fertigungssteuerung ebenfalls zumindest teilweise auf einem Abseitsdatenverarbeitungssystem basiert. Dann können Parameter, insbesondere die gewichteten Variablen, zur Veränderung, insbesondere Verbesserung, der Algorithmen von einer ersten Fertigungsstätte auch in anderen Fertigungsstätten genutzt werden und umgekehrt. Es ist so eine viel größere Datenbasis vorhanden und die Schachtelungsergebnisse für jeden einzelnen Fertigungsbetrieb können deutlich verbessert werden.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Flachbettwerkzeugmaschine,
- Fig. 2: eine schematische Darstellung eines Schachtelungsplans und
- Fig. 3: ein Flussdiagramm eines Verfahrens zur Erzeugung einer Schachtelung von Teilräumen für eine Ansteuerung eines Schneidprozesses einer Flachbettwerkzeugmaschine.

Hierin beschriebene zweidimensionale (2D-) Schachtelprobleme können, insbesondere bei Flachbett-Laserschneidmaschinen, hinsichtlich der Reduzierung des einzusetzenden Rohmaterials gelöst werden, da das Rohmaterial in der Regel einen erheblichen Teil der Gesamtkosten ausmacht. Allerdings können auch weitere Aspekte berücksichtigt werden. So können beispielsweise bei Flachbett-Lasermaschinen die relativen Lagen der erzeugten Werkstücke zu Auflagestegen der Laserschneidmaschine in Verfahren berücksichtigt werden. Dies ist z. B. in der deutschen Patentanmeldung 10 2018 124 146 der Anmelderin mit dem Titel "SCHACHTELN VON WERKSTÜCKEN FÜR SCHNEIDPROZESSE EINER FLACHBETTWERKZEUGMASCHINE" mit Anmeldetag 26. September 2018 und der deutschen Patentanmeldung mit dem Titel "BEWERTEN VON WERKSTÜCKLAGEN IN GESCHACHTELTEN ANORDNUNGEN" (eingereicht am gleichen Tag wie die vorliegende Anmeldung) offenbart.

Ferner kann eine Kollisionsprüfung zwischen dem Verlauf der Schneidlinie und Tragpunktspitzen, wie in EP 2 029 313 B1 offenbart, erfolgen. Des Weiteren kann eine Werkstückauflage mit positionierbaren Tragpunktspitzen, wie in EP 2 029 316 B1 offenbart, erfolgen. Schachtelungs- (Nesting) Ansätze, wie in "The geometry of nesting problems: A tutorial", by J. A. Bennell et. al., European Journal of Operational Research 184 (2008) 397-415 offenbart, können eingesetzt werden.

Bei einer errechneten geometrischen Schachtelung kann eine, insbesondere möglichst gute, Verfahrsequenz bezüglich der auszuschneidenden Werkstücke bestimmt werden, wobei z. B. Verbesserungen beispielsweise mit Traveling-Salesman-Ansätzen vorgenommen werden können.

Hierin beschriebene Aspekte basieren zum Teil auf der Erkenntnis, dass beim Schachteln von Teilräumen im Planungsraum (entsprechend dem Anordnen von Werkstücken auf einer Platte, aus der die Werkstücke auszuschneiden sind) die Effizienz des zugrundeliegenden Schneidprozesses in das Bewertungsverfahren eingehen kann und zwar insbesondere in die Erzeugung von neuen Schachtelungen bzw. zugrundeliegenden Reihenfolgen von Teilräumen. Das Verfahren kann dabei solange fortgesetzt werden, bis Kriterien wie z. B. die Materialeffizienz erreicht werden.

Mit den hierin vorgeschlagenen Verfahren kann so bei der Bewertung ein Roundtripping zwischen der Schachtelung von Teilräumen und einer Verbesserung des Schneidprozesses, beispielsweise eine Verfahrwegverbesserung, umgesetzt werden. Mit Verfahrweg ist hier der Weg gemeint, den der Laserkopf zwischen den Schneidvorgängen relativ zur Materialtafel zurücklegt. Dies kann beispielsweise wie folgt durchgeführt werden: In einem ersten Schritt wird ein Schachtelergebnis erzeugt, wobei bereits Anweisungen zur Anordnung der Werkstücke (bspw. Bottom-Left-Placement) angewendet werden, um initiale Schachtelergebnisse mit ausreichender Güte zu erstellen. Im ersten Schritt können Konfigurationsparameter wie Restmaterialstegbreite, d. h., die Breite von Material, die mindestens zwischen zwei Werkstücken als Restmaterial verbleiben soll, mit angegeben werden; dies ist allerdings optional. In einem zweiten Schritt wird die Güte eines Schachtelergebnisses beurteilt. Hierbei können z. B. Referenzpunkte der Teilräume wie Einstichpunkte oder Druckpunkte, Ausgangsdaten repräsentieren, die bei der Bewertung des Verfahrwegs eingesetzt werden können. Die Referenzpunkte können z. B. als Teil eines Polygonzugs oder Polygon-artigen Zugs zur Verdeutlichung des Schneidprozesses dargestellt werden. Berücksichtigt werden können ferner z. B. Überlappungen von Teilräumen/Werkstücken, Winkel, bei denen bei einem Schneidprozess ein Strahlabriss zu erwarten ist, oder die Zeitdauer, die zum Laserschneiden unter Berücksichtigung von Hitzeeffekten notwendig wäre. Das Bewertungsergebnis wird dazu verwendet, eine neue Schachtelung zu erzeugen. Anschließend wird wiederum eine Bewertung durchgeführt und der Vorgang fortgesetzt, bis die vorgegebenen Parameter wie z. B. Materialeffizienz und Qualität des Schnitts erfüllt sind.

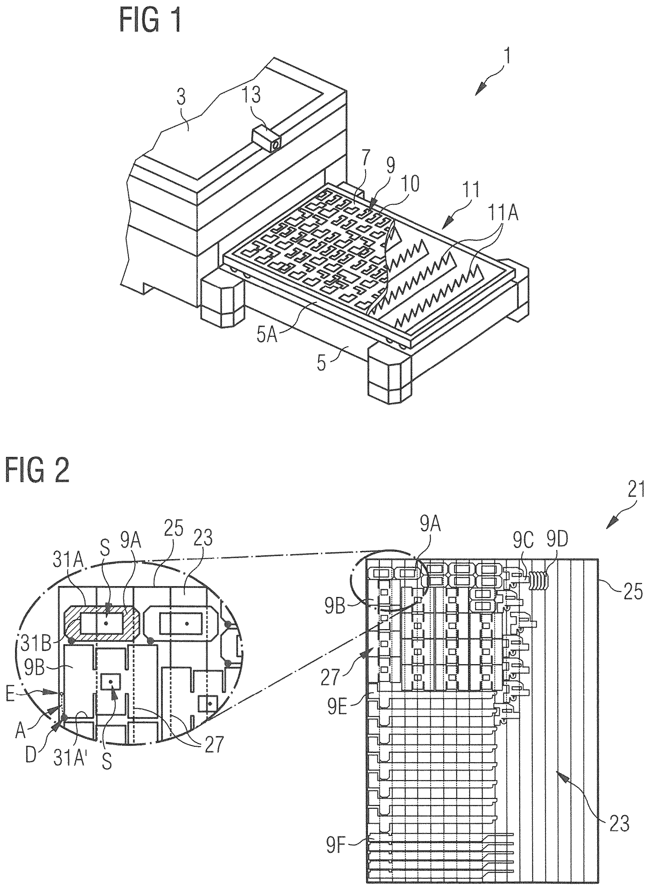

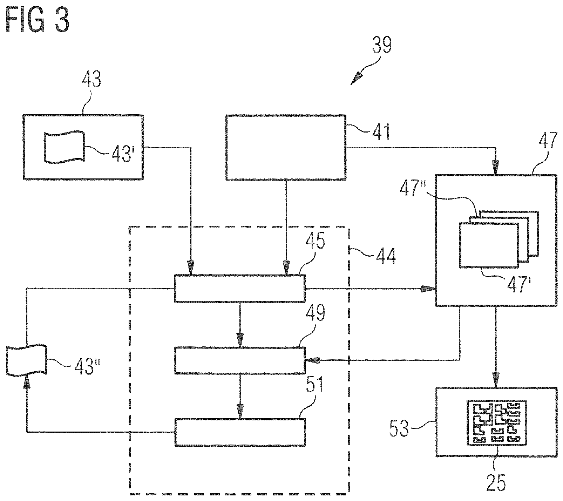

Im Folgenden wird zuerst die Erzeugung von Werkstücken mit einer Flachbett-Laserschneidmaschine erläutert und diese in Bezug zu Schachtelungsplänen gesetzt (Figuren 1 und 2). Ein Verfahren zur Erzeugung eines Schachtelungsplans wird anschließend in Verbindung mit Fig. 3 beschrieben.

Eine in Fig. 1 gezeigte schematische Flachbettwerkzeugmaschine 1 umfasst ein Hauptgehäuse 3, in dem der Schneidprozess mit einem Laserstrahl durchgeführt wird. Insbesondere wird ein Fokus des Laserstrahls von einem Steuerungssystem entlang vorgegebener in einem Bearbeitungsbereich angeordneten Schneidlinien über ein Material geführt, um aus diesem Werkstücke mit spezifischen Formen aus z. B. einem sich im Wesentlichen zweidimensional erstreckenden Blech zu schneiden.

Ferner umfasst die Flachbettwerkzeugmaschine 1 einen Palettenwechsler 5. Der Palettenwechsler 5 ist dazu ausgebildet, eine oder mehrere Paletten während der Fertigung zu positionieren. Auf einer Palette 5A kann eine zu schneidende Materialtafel (als Roh- oder Ausgangsmaterial) gelagert und in das Hauptgehäuse 3 für den Schneidvorgang eingebracht werden. Nach dem vollendeten Schneidvorgang kann die Palette 5A, wie in Fig. 1 gezeigt, mit einer geschnittenen Materialtafel 7 aus dem Hauptgehäuse 3 gefahren werden, sodass die geschnittenen Werkstücke 9 absortiert werden können.

Im Hauptgehäuse 3 kann der Laserbearbeitungskopf, aus dem der Laserstrahl austritt, im Bearbeitungsbereich frei positioniert werden, so dass der Laserstrahl im Wesentlichen entlang beliebiger zweidimensionaler Schneidlinien über die zu schneidende Materialtafel geführt werden kann. Beim Laserschneiden erwärmt der Laserstrahl das Metall entlang der Schneidlinie, bis es schmilzt. Ein Gasstrahl, meist Stickstoff oder Sauerstoff, tritt üblicherweise im Bereich des Laserstrahls aus dem Laserbearbeitungskopf aus und drückt das geschmolzene Material nach unten und aus dem sich ausbildenden Spalt. Die Materialtafel 7 wird somit beim Schneiden vom Laserstrahl vollständig durchtrennt.

Zum Ausschneiden eines Werkstücks 9 wird der Laserstrahl entlang einer Schneidlinie 10 bewegt. Diese beginnt üblicherweise an einem Einstichpunkt E (siehe Fig. 2), der außerhalb des Werkstücks 9 liegen kann, und nähert sich dann der Kontur des Werkstücks 9, insbesondere in einem Bogen (dem sogenannten Anschnitt A) an. Der Punkt, an dem die Schneidlinie zuerst die Kontur des Werkstücks berührt, ist der Punkt, an dem der Schnitt später abgeschlossen wird (ein kontinuierlicher Schneidvorgang vorausgesetzt). Dieser Punkt wird als Druckpunkt D bezeichnet, da er der Punkt ist, an dem der austretende Gasstrahl einen Druck auf das geschnittene Teil ausübt und zwar zu dem Zeitpunkt, an dem es sich erstmals frei bewegen kann. Insbesondere bei dünnen Materialtafeln kann der Gasdruck zu einem Verkippen des Werkstücks führen, so dass potentiell ein Teil des Werkstücks aus der Ebene der Metalltafel herausragen und z. B. mit dem Schneidkopf kollidieren kann.

Einstichpunkt E und Druckpunkt D stellen Referenzpunkte eines Teilraums im Planungsraum dar.

Im in Fig. 1 gezeigten Ausführungsbeispiel weist die Palette 5A mehrere quer zur Einschubrichtung verlaufende und parallel zueinander ausgerichtete Auflagestege 11 auf. Beispielhaft haben die Auflagestege 11 einen Abstand von 20 mm bis 100 mm, z. B. 60 mm zueinander. Die Auflagestege 11 bilden Auflagebereiche 11A aus, auf denen die Materialtafel 7 abgelegt wird. Die Auflagebereiche 11A bilden üblicherweise Gitterpunkte, die entlang der Auflagestege 11 einen Abstand von 5 mm bis 50 mm, z. B. 15 mm aufweisen können, wobei ein Auflagesteg eine Dicke von 1 mm bis 5 mm, z. B. 2 mm aufweist. Die Auflagebereiche 11A bilden somit ein Raster von Bereichen, die den Schneidvorgang der auf ihnen liegenden Materialtafel 7 beeinflussen können. Die den Schneidvorgang beeinflussenden Bereiche der Auflagestege können sich überdies auf Bereiche erstrecken, die sich direkt an die im Kontakt mit der Materialtafel stehenden Auflagebereiche anschließen, z. B. die zu den Auflagebereichen 11A führenden Flanken der Auflagestege 11.

Die Auflagestege 11 und insbesondere die Auflagebereiche 11A können bei der Anordnung von Teilräumen 9A-9F (entsprechend den Werkstücken 9) in einem Planungsraum 23 (entsprechend der Materialtafel 7) berücksichtigt werden, um beispielsweise die Qualität von geschnittenen Werkstücke 9 zu erhöhen oder die Beschädigung der Auflagestege 11 zu reduzieren.

Fig. 1 zeigt ferner eine Kamera 13, die z. B. am Hauptgehäuse 3 angeordnet ist. Die Kamera 13 kann u. a. für eine Bilderfassung der Palette 5A, der Auflagestege 11 und Auflagebereiche 11A sowie der relativen Lage der Materialtafel 7 bezüglich der Palette 5A (und evtl. der Auflagestege 11 und Auflagebereiche 11A) ausgebildet sein und steht in Verbindung mit einer Bildauswerteeinheit des Steuerungssystems der Flachbettwerkzeugmaschine 1.

Die Flachbettwerkzeugmaschine 1 kann ein lokales und/oder Cloud-basiertes Fertigungssteuerungssystem zum Durchführen der hierin beschriebenen Verfahren aufweisen. Mit diesem können in Echtzeit während des Betriebs der Flachbettwerkzeugmaschine 1 die Bewertungen und Verschachtelungen erzeugt werden. Dadurch kann der Flachbettwerkzeugmaschine beispielsweise ein, insbesondere schon kurz nach dem Ablegen der Materialtafel hinsichtlich eines Schneidprozesses verbesserter Schachtelungsplan bereitgestellt werden.

Mit "Cloud-basiert" und "Abseitsdatenverarbeitungssystem" ist in diesem Dokument eine, insbesondere örtlich entfernte, vorzugsweise anonymisierte, Speicher- und/oder Datenverarbeitungsvorrichtung gemeint, in der Daten und Bewertungen von mehr als einem, vorteilhafterweise von mehreren hundert oder mehreren tausend unterschiedlichen Nutzern gespeichert und/oder rechentechnisch verarbeitet werden können. Hierdurch können verschiedene Nutzer unabhängig vom Fertigungsstandort zur Verbesserung des Verfahrens beitragen. Es wurde erkannt, dass die beschriebenen Verfahren durchschlagende Erfolge erst erzielen, wenn mehrere hundert, insbesondere mehrere tausend, insbesondere zehntausend, insbesondere mehrere hunderttausend Nutzerbewertungen ausgelesen wurden. Eine solche Datenmenge ist für eine einzelne Fertigungsstätte oftmals in einem Jahr nicht erreichbar. Demnach wäre das Verfahren vermutlich für eine solche Fertigungsstätte unter Umständen uninteressant geblieben.

Man erkennt, dass Schneidwege über Stege oder das Kippen eines Werkstücks 9 zu Schäden am Auflagesteg 11 und/oder am Werkstück 9 und/oder an einem Schneidkopf führen und so das Risiko von Ausschuss und Ausfallzeiten erhöhen. Ferner führen Beschädigungen der Auflagestege 11 zu höheren Servicekosten für den Austausch oder zu längeren Stillstandzeiten. Im Fall von einem Abtrag des Auflagestegs 11 im Ablagebereich 11A kann sich ferner die Anzahl der Auflagepunkte reduzieren, was das Risiko eines Verkippens von Werkstücken 9 erhöhen kann. Verläuft die Schneidlinie 10 in der Nähe eines Auflagebereichs 11A besteht ein erhöhtes Risiko für eine Qualitätsminderung z. B. der Unterseite des Werkstücks. Auch kann der Schneidprozess zusammenbrechen, wenn geschmolzenes Material nicht ausreichend aus dem Spalt ausgeblasen werden kann und somit ein Werkstück nicht vollständig abgetrennt wird, was jeweils zu mehr Ausschussteilen führen kann.

Eine Aufgabe der hierin beschriebenen Schachtelungsverfahren ist es somit auch, eine Anordnung der Teilräume 9A-9F im Planungsraum 23 (entsprechend der Werkstücke 9 in der Materialtafel 7) vorzuschlagen, die die zuvor aufgeführten Risiken und mögliche Zusatzkosten aufgrund von z. B. Ausschussteilen sowie Service und Ausfall der Flachbettwerkzeugmaschine reduziert.

Fig. 2 zeigt einen Schachtelungsplan 21 (allgemein eine Anordnung von Teilräumen 9A-9F), wie er mit einer Anordnungsvorschrift in einem zweidimensionalen Planungsraum 23 mithilfe eines Algorithmus erzeugt werden kann. Dies kann z. B. eine Bottom (Hauptrichtung)-Left (Nebenrichtung)-Anordnungsvorschrift sein. In Fig. 2 verläuft die Hauptrichtung von rechts nach links und die Nebenrichtung von oben nach unten. Der Planungsraum 23 wird im Bereich einer Planungstafel 25 aufgespannt. Die Planungstafel 25 wird für den Schneidvorgang auf die Materialtafel 7 derart übertragen, dass entsprechende Geometriedaten des Planungsraums 23 dem von der Flachbettwerkzeugmaschine 1 für eine Materialtafel 7 bereitgestellten Bearbeitungsbereich entsprechen (und die Lagerung mit den angenommenen Positionsdaten der Auflageräume übereinstimmt). Im vorliegenden Beispiel ist ein rechteckiger Planungsraum 23 angenommen worden, der auf eine entsprechend rechteckig geformte Materialtafel 7 angewandt werden soll. Andere Formen sind ebenfalls denkbar.

Der Schachtelungsplan 21 wird in einer dem Schneidvorgang vorausgehenden Planungsphase erstellt, beispielsweise mit der Steuerungseinheit der Flachbettwerkzeugmaschine, wenn in die Planung z. B. aktuell erfasste Positionsdaten einfließen, oder in einer eigenständigen Planungseinheit mit entsprechender Rechenkapazität, falls z. B. von vorbestimmten Positionsdaten ausgegangen wird und diese dann nachträglich für den Schneidvorgang aufgrund einer entsprechenden Positionierung der Materialtafel auf der Palette und den Auflagestegen umgesetzt werden. Die Erstellung des Schachtelungsplans 21 kann Teil des Fertigungssteuerungs-Systems sein.

Der Schachtelungsplan 21 zeigt eine überlappungsfreie Anordnung von Teilräumen 9A-9F im zweidimensionalen Planungsraum 23, wobei die (ebenfalls zweidimensionalen) Teilräume 9A-9F sechs verschiedenen Typen von Werkstücken entsprechen. Der Schachtelungsplan 21 betrifft die Erzeugung von hier beispielhaft 50 Testwerkstücken.

Der dargestellten Anordnung liegt eine Einfügereihenfolge für die insgesamt 50 Teilräume zugrunde. Eine Einfügereihenfolge bestimmt allgemein die Reihenfolge, mit der die Teilräume bei einer sequenziellen Erzeugung des Schachtelungsplans 21 nacheinander in den Planungsraum 23 eingefügt und hier beispielhaft gemäß der Bottom-Left-Anordnungsvorschrift (Strategie) im Planungsraum 23 angeordnet werden.

Im Schachtelungsplan 21 ist ferner schematisch eine räumliche Anordnung von vorbestimmten Auflageräumen 27 festgehalten. Zur Verdeutlichung des Ursprungs der Auflageräume sind diese teilweise, ähnlich den Auflagestegen, in Linien zusammengefasst und nur im Bereich der Teilräume 9A-9F lokalisiert als Punkte dargestellt. Wie bereits angesprochen können Positionsdaten insbesondere bei der Bewertung von Lagen der Teilräume 9A-9F verwendet werden.

Zur Verdeutlichung werden weitere Schneidprozessdaten und -parameter in einem vergrößerten Ausschnitt einer Ecke des Planungsraums 23 gezeigt. Jeder der Teilräume 9A-9F ist durch eine oder mehrere, insbesondere geschlossene, Konturen begrenzt. Beispielhaft sind für den Teilraum 9A (gestrichelt hervorgehoben) eine Außenkontur 31A und eine Innenkontur 31B eingezeichnet. Für eine Außenkontur 31A' des Teilraums 9B sind zusätzlich ein Einstichpunkt E, ein Anfahrweg A und ein Druckpunkt D eingezeichnet.

Die beispielhaften Teilräume haben unterschiedliche Größen, sind aber z. B. alle klein genug, damit der Gasdruck, z.B. verursacht von der Laserschneiddüse, die Stabilität eines Teilraumes beeinflussen kann. Im vergrößerten Bereich der Fig. 2 erkennt man einzelne Auflageräume 27 innerhalb des Teilraums 9B, die zusammen mit dem jeweiligen Druckpunkt D und dem jeweiligen Schwerpunkt S eines Teilraums eine Kippanfälligkeit eines durch den Teilraum 9B bestimmten Werkstücks definieren.

Dem in Fig. 2 abgebildeten Schachtelungsplan 21 liegt ferner ein Werkstückmindestabstand zugrunde, der u. a. durch die Materialdicke der zu schneidenden Materialtafel und den vorzunehmenden Schneidparametern festgelegt wird. Der Werkstückmindestabstand kann mindestens zwischen zwei benachbarten, im Planungsraum 23 angeordneten Teilräumen 9A-9F vorliegen. Er kann z. B. in einem Bereich von beispielsweise 5 mm bis 20 mm, insbesondere 10 mm liegen.

Für die nachfolgend beschriebenen Schachtelungsverfahren können allgemein Anordnungsvorschriften eingesetzt werden, die definieren, wie Teilräume im Planungsraum nacheinander räumlich angeordnet werden. Dies ist nicht auf eine Bottom-Left-Strategie beschränkt, wie sie den in den Figuren gezeigten beispielhaften Schachtelungsplänen zugrunde liegt. Vielmehr können z. B. auch Bottom-Left-Fill-Strategien oder No-Fit-Polygon-Ansätze verfolgt werden.

Mit Bezug auf das in Fig. 3 gezeigte Flussdiagramm eines Verfahrens 39 zum Schachteln von Teilräumen 9A-9F für eine Ansteuerung eines Schneidprozesses einer Flachbettwerkzeugmaschine 1 zum Ausschneiden von Werkstücken 9 aus einer Materialtafel 7 gehen die hierin vorgeschlagenen Schachtelungsverfahren allgemein davon aus, dass für eine Schachtelung Bewertungskriterien vorliegen, die basierend auf der Darstellung von Teilräumen im Planungsraum umgesetzt werden können. Bewertungskriterien betreffen z. B. Überlappungen von Geometrien, insbesondere der Teilräume, aber auch evtl. Auflageräume, die der Lagerung der Materialtafel entsprechen. Bewertungskriterien können ferner auch Winkel mit Strahlabriss oder die Zeitdauer, die zum Laserschneiden unter Berücksichtigung von Hitzeeffekten notwendig wäre, betreffen. Zu umsetzbaren Bewertungskriterien siehe z. B. auch die eingangs genannte deutsche Patentanmeldung mit der Anmeldenummer 10 2018 124 146 und dem Titel "BEWERTEN VON WERKSTÜCKLAGEN IN GESCHACHTELTEN ANORDNUNGEN".

In einem ersten Schritt 41 werden als Basis der Bewertung von Schachtelungsergebnissen Bewertungskriterien für eine Schachtelung eingelesen.

In einem Schritt 43 werden Sequenzdaten 43' für eine Schachtelung erzeugt. Beispielhafte Verfahren hierzu sind ebenfalls in der eingangs genannten deutschen Patentanmeldung mit der Anmeldenummer 10 2018 124 146 und dem Titel "BEWERTEN VON WERKSTÜCKLAGEN IN GESCHACHTELTEN ANORDNUNGEN" beschrieben. Sequenzdaten umfassen dabei Daten, die eine vollständige Schachtelungssequenz beschreiben. Dies sind zum einen Daten, die Konturen der Teilräume, d. h., die Werkstückform, definieren. Ferner umfassen Sequenzdaten Referenzpunkte der Teilräume, eine vorzunehmende Reihenfolge der Schneidvorgänge für einen einzelnen Teilraum und für alle Teilräume sowie Verbindungswege zwischen den Schneidvorgängen.

In einem Schritt 45 werden die Sequenzdaten 43' im Rahmen eines Bewertungsalgorithmus 44 bewertet und Bewertungsdaten für die Sequenzdaten 43' erzeugt. Die Bewertungsdaten beziehen sich dabei auf die eingelesenen Bewertungskriterien.

Durch z. B. Vergleichen, Differenzbildung, Verhältnisbildung, Korrelationsberechnung, allgemein durch eine kombinatorische Logik, der Bewertungsdaten mit den Bewertungskriterien werden Ergebnisdaten 47' im Schritt 47 erzeugt. Die Ergebnisdaten 47' können z. B. Verbesserungsparameter wie Materialeffizienz, Werkstückqualität und Beschädigungsrate betreffen.

In einem Schritt 49 werden mit dem Bewertungsalgorithmus 44 Verrechnungsdaten aus den Sequenzdaten 43', Bewertungsdaten und Ergebnisdaten 47' erzeugt. Verrechnungsdaten sind Daten, die dazu dienen, das Ergebnis des Schachtelns (d. h., die Bewertungs- und/oder Ergebnisdaten) zu verbessern. Verrechnungsdaten sind in die Aggregation, hierin allgemein als eine Neuzusammenstellung von Datensätzen mithilfe von Aggregations-Routinen verstanden, eingebunden, wie nachfolgend noch für den Bewertungsalgorithmus 44 erläutert wird.

Unter Berücksichtigung der Verrechnungsdaten werden in einem Schritt 51 mit dem Bewertungsalgorithmus 44 neue Sequenzdaten 43" erzeugt. (Es wird angemerkt, dass bereits Schritt 43 zur Erzeugung des (initialen) Sequenzdaten 43' und/oder Schritt 47, d. h., die Erzeugung von Ergebnisdaten, als Teil des Bewertungsalgorithmus 44 implementiert werden kann.) Die Verrechnungsdaten können beispielsweise in die Erzeugung einer neuen Reihenfolge der anzuordnenden Teilräume 9A, ... eingehen, neue Schwerpunkte bei der Bewertung setzen oder eine spezifische Reihenfolge der Schneidvorgänge einzelner oder aller Teilräume 9A, ... bevorzugen.

Der z. B. die Schritte 45, 49 und 51 umfassende Algorithmus 44 aktiviert bei der Erzeugung von Bewertungsdaten, Verrechnungsdaten und/oder weiterer Sequenzdaten 43" die Durchführung zumindest einer Daten-Aggregations-Routine, die mehrere Eingangsdaten zu Ausgangsdaten aggregiert. Daten-Aggregations-Routinen können selbst kleine Algorithmen/Subroutinen darstellen, die mehrere Daten aus mehreren Datentypen miteinander verknüpfen. Beispielhafte Eingangsdaten sind z. B. die durch den Bewertungsalgorithmus eingelesenen Sequenzdaten, die durch den Bewertungsalgorithmus erzeugten Bewertungsdaten, die durch den Bewertungsalgorithmus erzeugten Verrechnungsdaten, die Ausgangsdaten derselben Daten-Aggregations-Routine und/oder die Ausgangsdaten einer anderen Daten-Aggregations-Routine. Die Eingangsdaten umfassen zumindest zwei der genannten Datentypen. Dabei können in einigen Ausführungsformen Daten-Aggregations-Routinen immer mit den Verrechnungsdaten und mindestens einem der anderen genannten Datentypen der Eingangsdaten ablaufen. Die Ausgangsdaten sind z. B. die durch den Bewertungsalgorithmus erzeugten Sequenzdaten, die durch den Bewertungsalgorithmus erzeugten Bewertungsdaten und die durch den Bewertungsalgorithmus erzeugten Verrechnungsdaten.

Verrechnungsdaten können im Bewertungsalgorithmus 44 bestimmten anderen Eingangsdaten der Daten-Aggregations-Routinen zugeordnet sein und mit diesen verknüpft werden, insbesondere multipliziert werden. Dadurch kann ermittelt werden, welche Eingangsdaten eine, insbesondere möglichst positive, Wirkung auf die Ergebnisdaten und/oder Bewertungsdaten haben können. Wenn die diesen Eingangsdaten zugeordneten Verrechnungsdaten dann so eingestellt werden, dass die Verknüpfung (Multiplikationen) der den Eingangsdaten zugeordneten Verrechnungsdaten dazu führt, dass die Ausgangsdaten das Ergebnis, insbesondere möglichst positiv, beeinflussen, so kann das Ergebnis sukzessive verbessert werden. Gleichzeitig kann aber auch deren Einfluss auf andere Bewertungsdaten und/oder Ergebnisdaten ermittelt werden und gegebenenfalls entsprechend nachjustiert werden.

Wie in Fig. 3 angedeutet werden die Schritte 45 bis 51 mehrfach wiederholt und entsprechend wird eine Mehrzahl von Ergebnisdaten 47', 47" für eine Mehrzahl von Sequenzdaten 43', 43" erzeugt. Dies kann fortgesetzt werden, bis die Ergebnisdaten einen bezüglich der Bewertungskriterien vorgegebenen Bereich oder eine maximale Anzahl überschreiten.

Aus den bis dann erzeugten Sequenzdaten 43" wird dann in einem Schritt 53 eine für den Schneidprozess umzusetzende Anordnung von Teilräumen und Umsetzung der Schneidabfolge als Ergebnis des Verfahrens zum Schachteln von Teilräumen abgeleitet. Dies umfasst den Schneidplan 25, der der Ansteuerung der Flachbettwerkzeugmaschine zur Erzeugung der den Teilräumen entsprechenden Werkstücken zugrunde gelegt werden soll.

Mit anderen Worten können die hierin beschriebenen Vorgehensweisen dazu genutzt werden, mit einem genetischen Algorithmus Schachtelergebnisse zu erzeugen. Dabei kann die Effizienz eines Schachtelungsergebnisses jeweils anschließend durch ein neuronales Netz bewertet werden und die nächste Evolutionsstufe des genetischen Algorithmus darauf basierend angestoßen werden. Das Verfahren endet, wenn vorgegebene Kriterien (bspw. Materialeffizienz) erreicht werden. Somit kann ein Roundtripping zwischen Schachtelung und Verfahrwegsverbesserung/-optimierung vorgenommen werden. Dies kann beispielsweise wie folgt implementiert werden:
In einem ersten Schritt wird eine genetische Sequenz erzeugt, die ein Schachtelergebnis repräsentiert. Hierzu werden (Anordnungs-) Regeln (bspw. Bottom-Left-Placement) angewendet, um initiale Schachtelergebnisse mit ausreichender Güte zu erstellen. Bei dem ersten Schritt können Konfigurationsparameter wie Stegbreite mit angegeben werden, dies ist aber rein optional.

In einem zweiten Schritt werden neuronale Netzwerke (bspw. Kohonen Feature-Maps) verwendet, um die Güte eines Schachtelergebnisses zu beurteilen. Hierbei können die Output-Neuronen durch die Referenzpunkte der Teile (beispielsweise als Polygonzug dargestellt) repräsentiert werden, wobei die Verbindungen der Output-Neuronen durch Anomalien bestimmt sind (bspw. durch Überlappungen von Geometrien, Winkel mit Strahlabriss oder die Zeitdauer, die zum Laserschneiden unter Berücksichtigung von Hitzeeffekten notwendig wäre).

In einem dritten Schritt wird der Output des neuronalen Netzwerks dazu verwendet, um eine Neusequenzierung der Gensequenz durchzuführen, die dann im genetischen Algorithmus verwendet wird. Anschließend wird wiederum eine Klassifizierung durch das neuronale Netzwerk durchgeführt. Das Vorgehen wird fortgesetzt, bis die vorgegebenen Optimierungsparameter (wie z. B. Materialeffizienz, Qualität etc.) erfüllt sind.

## Patentansprüche

1. Verfahren (39) zum Schachteln von Teilräumen (9A-9F), wobei die Teilräume (9A-9F) in einem zweidimensionalen Planungsraum (23) angeordnet und durch Konturlinien im zweidimensionalen Planungsraum (23) begrenzt sind und wobei ein Teilraum (9A-9F) für eine Ansteuerung eines Schneidprozesses einer Flachbettwerkzeugmaschine (1) zum Ausschneiden eines Werkstücks (9) aus einer Materialtafel (7) entlang mindestens einer Schneidlinie, die einer Konturlinie des Teilraums (9A-9F) entspricht, vorgesehen ist, mit den von einem Abseitsdatenverarbeitungssystem und/oder einem lokalen Fertigungssteuerungssystem durchgeführten Schritten:
a. Einlesen (Schritt 41) von Bewertungskriterien für eine Anordnung von geschachtelten Teilräumen (9A-9F);
b. Erzeugen (Schritt 43) von Sequenzdaten (43') für die Anordnung von geschachtelten Teilräumen (9A-9F), wobei die Sequenzdaten (43', 43") Daten umfassen, die eine eine vorgegebene Anzahl von Teilräumen (9A-9F) umfassende Schachtelungssequenz der Teilräume im Planungsraum (23) beschreiben, wobei die Daten Konturlinien der Teilräume (9A-9F), eine Schneidreihenfolge der Konturlinien der Teilräume (9A-9F), Referenzpunkte der Teilräume (9A-9F) und Verbindungswege zwischen den Konturlinien umfassen;
c. Erzeugen (Schritt 45) von Bewertungsdaten durch Bewertung der Sequenzdaten (43') mit einem Bewertungsalgorithmus (44);
d. Erzeugen (Schritt 47) von Ergebnisdaten (47') auf Basis einer kombinatorischen Logik der Bewertungsdaten mit den Bewertungskriterien;
e. Erzeugen (Schritt 49) von Verrechnungsdaten aus den Sequenzdaten (43'), Bewertungsdaten und Ergebnisdaten (47') mit dem Bewertungsalgorithmus (44);
f. Erzeugen (Schritt 51) weiterer Sequenzdaten (43") unter Berücksichtigung der Verrechnungsdaten mit dem Bewertungsalgorithmus (44); und
g. Wiederholen der Schritte c. bis f. bis die Ergebnisdaten (47', 47") einen vorgegebenen Bereich überschreiten,
h. Ableiten (Schritt 53) aus den bis dann erzeugten Sequenzdaten (43") einer für einen Schneidprozess umzusetzenden Anordnung von Teilräumen und Umsetzung der Schneidabfolge als Ergebnis des Verfahrens zum Schachten von Teilräumen,
i. Ausgeben der abgeleiteten Anordnung von Teilräumen als Steuersignal an die Flachbettwerkzeugmaschine (1), um Werkstücke, die den Teilräumen (9A-9F9 entsprechen, aus der Materialtafel (7) auszuschneiden,
wobei der Bewertungsalgorithmus (44) bei der Erzeugung von Bewertungsdaten, Verrechnungsdaten und/oder weiterer Sequenzdaten (43") mindestens eine Daten-Aggregations-Routine ausführt, die
i. bei ihrer Aktivierung mehrere Eingangsdaten zu Ausgangsdaten aggregiert,
ii. wobei die Eingangsdaten zumindest zwei der folgenden Datentypen aufweisen:
die durch den Bewertungsalgorithmus eingelesenen Sequenzdaten (43', 43"),
die durch den Bewertungsalgorithmus erzeugten Bewertungsdaten,
die durch den Bewertungsalgorithmus erzeugten Verrechnungsdaten,
die Ausgangsdaten einer anderen Daten-Aggregations-Routine und
die Ausgangsdaten derselben Daten-Aggregations-Routine, die zuvor durchlaufen wurde,
iii. wobei die Ausgangsdaten zumindest einen der folgenden Datentypen beeinflussen:
die durch den Bewertungsalgorithmus erzeugten Sequenzdaten (43"),
die durch den Bewertungsalgorithmus erzeugten Bewertungsdaten und
die durch den Bewertungsalgorithmus erzeugten Verrechnungsdaten.

2. Verfahren (39) nach Anspruch 1, wobei die Bewertungskriterien Variablen, die der Anordnung von Teilräumen zugeordnet sind, umfassen und die Variablen ein Überlappen von Teilräumen (9A-9F), relative Winkel von Abschnitten der Konturlinien, die einen Strahlabriss während des Schneidprozesses auslösen können, und/oder eine Zeitdauer, die dem Schneidprozess insbesondere unter Berücksichtigung von Hitzeeffekten zuzuordnen ist, charakterisieren und
wobei die Bewertungskriterien zumindest teilweise von einem Nutzer vorgebbar sind oder alternativ oder zusätzlich zumindest teilweise von einer, insbesondere übergeordneten, Steuerung vorgebbar sind.

3. Verfahren (39) nach Anspruch 1 oder Anspruch 2, wobei die Bewertungsdaten Bewertungen der Variablen darstellen, die den Bewertungskriterien zugeordnet sind.

4. Verfahren (39) nach einem der vorhergehenden Ansprüche, wobei die Ergebnisdaten Daten umfassen, die einen Verbesserungsparameter, insbesondere eine Materialeffizienz der Anordnung von Teilräumen (9A-9F), und eine Qualität der Werkstückerzeugung definieren, und
wobei die kombinatorische Logik Schritte umfasst, die einen Vergleich, eine Differenzbildung, eine Verhältnisbildung und/oder eine Korrelationsbildung der Bewertungsdaten mit den Bewertungskriterien durchführen.

5. Verfahren (39) nach einem der vorhergehenden Ansprüche, wobei die Verrechnungsdaten bestimmten Eingangsdaten der Daten-Aggregations-Routinen zugeordnet sind und mit diesen verknüpft, insbesondere multipliziert, werden und
wobei die Verrechnungsdaten Daten umfassen, die zur Verbesserung der Anordnung von geschachtelten Teilräumen (9A-9F), insbesondere der zugeordneten Bewertungs- und/oder Ergebnisdaten (47', 47") ausgebildet sind.

6. Verfahren (39) nach Anspruch 5, wobei die Verrechnungsdaten Daten umfassen, die für ein Bestimmen einsetzbar sind, welche Eingangsdaten eine, insbesondere möglichst positive, Auswirkung auf die Ergebnisdaten und/oder Bewertungsdaten haben, insbesondere um die diesen zugeordneten Verrechnungsdaten dann so einzustellen, dass die Verknüpfung, insbesondere Multiplikationen, der den Eingangsdaten zugeordneten Verrechnungsdaten dazu führt, dass die Ausgangsdaten das Ergebnis, insbesondere möglichst positiv, beeinflussen, wodurch das Ergebnis sukzessive verbessert werden kann, und
wobei optional ein Einfluss der Verrechnungsdaten auf andere Bewertungsdaten und/oder Ergebnisdaten (47', 47") ermittelt wird.

7. Verfahren (39) nach einem der vorhergehenden Ansprüche, wobei der Bewertungsalgorithmus (44) die mindestens eine Daten-Aggregations-Routine mehrfach, insbesondere häufiger als zehnmal, insbesondere häufiger als hundertmal, insbesondere häufiger als tausendmal, insbesondere häufiger als zehntausendmal durchführt und dabei der Daten-Aggregations-Routine zumindest einmal Ausgangsdaten einer anderen Daten-Aggregations-Routine oder derselben Daten-Aggregations-Routine, die zuvor durchlaufen wurde, als Eingangsdaten zuweist.

8. Verfahren (39) nach einem der vorhergehenden Ansprüche, wobei eine Daten-Aggregations-Routine dazu ausgebildet ist, mehrere Daten aus mehreren Datentypen miteinander zu verknüpfen und/oder
wobei die Eingangsdaten insbesondere die durch den Bewertungsalgorithmus (44) erzeugten Verrechnungsdaten und zusätzlich
die Sequenzdaten (43', 43"),
die Bewertungsdaten,
die Ausgangsdaten einer anderen Daten-Aggregations-Routine und/oder
die Ausgangsdaten derselben Daten-Aggregations-Routine
umfassen und/oder
wobei die mindestens eine Daten-Aggregations-Routine dazu ausgelegt ist, die Verrechnungsdaten mit einem anderen Datentyp zu verknüpfen, insbesondere zu multiplizieren.

9. Fertigungssystem mit
einer Flachbettwerkzeugmaschine (1) zum Ausschneiden von Werkstücken (9) gemäß werkstückspezifischen Schneidkonturen aus einer Materialtafel (7) und
einem Abseitsdatenverarbeitungssystem und/oder einem lokalen Fertigungssteuerungssystem, das dazu eingerichtet ist, ein Verfahren (39) nach einem der Ansprüche 1 bis 8 auszuführen, um eine Anordnung von Teilräumen (9A-9F) zu bestimmen, und die Anordnung von Teilräumen (9A-9F) als Steuersignal an die Flachbettwerkzeugmaschine (1) auszugeben, um Werkstücke, die den Teilräumen (9A-9F) entsprechen, aus der Materialtafel (7) auszuschneiden.

10. Fertigungssystem nach Anspruch 9, wobei das Abseitsdatenverarbeitungssystem eine, insbesondere örtlich entfernte, vorzugsweise anonymisierte, Berechnungs-, Steuerungs- und/oder Speichervorrichtung umfasst, in der die Bewertungsdaten und/oder die der Ergebnisdaten (47', 47") für eine Mehrzahl von Sequenzdaten (43', 43"), vorteilhafterweise von mehreren hundert oder mehreren tausend unterschiedlichen Sequenzdaten für eine Schachtelung, insbesondere von unterschiedlichen Nutzern, insbesondere anonymisiert, erzeugt und gespeichert werden.

11. Fertigungssystem nach Anspruch 9 oder Anspruch 10, wobei die Flachbettwerkzeugmaschine (1) zur Bearbeitung von planen, insbesondere biegefesten, Gegenständen, wie Blechtafeln, eingerichtet ist und insbesondere als Laserbearbeitungsmaschine, wie eine Laserschneidmaschine, ausgebildet ist.

## Claims

1. A method (39) for nesting sub-spaces (9A-9F), wherein the sub-spaces (9A-9F) are arranged in a two-dimensional planning space (23) and are delimited by contour lines in the two-dimensional planning space (23), and wherein a sub-space (9A-9F) is provided for controlling a cutting process of a flatbed machine tool (1) for cutting out a workpiece (9) from a material panel (7) along at least one cutting line that corresponds to a contour line of the sub-space (9A-9F), with the following steps that are carried out by a remote data processing system and/or a local manufacturing control system:
a. reading in (step 41) evaluation criteria for an arrangement of nested sub-spaces (9A-9F);
b. generating (step 43) sequence data (43') for the arrangement of nested sub-spaces (9A-9F), wherein the sequence data (43', 43") comprise data that describe a nesting sequence of the sub-spaces in the planning space (23), said nesting sequence comprising a predefined number of sub-spaces (9A-9F), wherein the data comprise contour lines of the sub-spaces (9A-9F), a cutting order of the contour lines of the sub-spaces (9A-9F), reference points of the sub-spaces (9A-9F), and connection paths between the contour lines;
c. generating (step 45) evaluation data by evaluating the sequence data (43') using an evaluation algorithm (44);
d. generating (step 47) result data (47') using the evaluation criteria based on a combinatorial logic of the evaluation data;
e. generating (step 49) calculation data from the sequence data (43'), evaluation data, and result data (47') using the evaluation algorithm (44);
f. generating (step 51) further sequence data (43"), taking into account the calculation data, using the evaluation algorithm (44); and
g. repeating the steps c. through f. until the result data (47', 47") exceeds a predefined range,
h. deriving (step 53), from the sequence data (43") generated up to this point, an arrangement of sub-spaces to be implemented for a cutting process, and implementing the cutting series as the result of the method for nesting sub-spaces,
i. outputting the derived arrangement of sub-spaces as a control signal to the flatbed machine tool (1) in order to cut out from the material panel (7) workpieces that correspond to the sub-spaces (9A-9F),
wherein the evaluation algorithm (44) executes at least one data aggregation routine during the generation of evaluation data, calculation data, and/or further sequence data (43"), said routine,
i. when activated, aggregating multiple input data to form output data,
ii. wherein the input data have at least two of the following data types:
the sequence data (43', 43") read in by the evaluation algorithm,
the evaluation data generated by the evaluation algorithm,
the calculation data generated by the evaluation algorithm,
the output data of another data aggregation routine, and
the output data of the same data aggregation routine that was previously run through,
iii. wherein the output data influence at least one of the following data types:
the sequence data (43") generated by the evaluation algorithm,
the evaluation data generated by the evaluation algorithm, and
the calculation data generated by the evaluation algorithm.

2. The method (39) of claim 1, wherein the evaluation criteria comprise variables associated with the arrangement of sub-spaces, and wherein the variables characterize an overlapping of sub-spaces (9A-9F), relative angles of sections of the contour lines that can trigger a breaking off of the beam during the cutting process, and/or a time duration to be associated with the cutting process, in particular one that takes into account heat effects, and
wherein the evaluation criteria are at least partially predefinable by a user or are alternatively or additionally predefinable, at least partly, by a control system, in particular a superordinate control system.

3. The method (39) according to claim 1 or claim 2, wherein the evaluation data represents evaluations of the variables that are associated with the evaluation criteria.

4. The method (39) according to one of the preceding claims, wherein the result data comprise data that define an improvement parameter, in particular a material efficiency of the arrangement of sub-spaces (9A-9F), and a quality of the workpiece generation, and
wherein the combinatorial logic comprises steps that carry out a comparison, a formation of a difference, a formation of a ratio, and/or a formation of a correlation of the evaluation data with the evaluation criteria.

5. The method (39) according to one of the preceding claims, wherein the calculation data are associated with certain input data of the data aggregation routines, and are linked thereto, in particular multiplied, and
wherein the calculation data comprise data that are designed to improve the arrangement of nested sub-spaces (9A-9F), in particular to improve the associated evaluation and/or result data (47', 47").

6. The method (39) according to claim 5, wherein the calculation data comprise data that can be employed for a determining of which of the input data have an effect, in particular as positive an effect as possible, on the result data and/or evaluation data, in particular in order to then adjust the calculation data associated therewith such that the link, in particular multiplications, of the calculation data associated with the input data results in the output data influencing the result, in particular as positively as possible, whereby the result can be successively improved, and
wherein optionally an influence of the calculation data on other evaluation data and/or result data (47', 47") is ascertained.

7. The method (39) according to one of the preceding claims, wherein the evaluation algorithm (44) carries out the at least one data aggregation routine multiple times, in particular more frequently than ten time, in particular more frequently than a hundred times, in particular more frequently than a thousand times, in particular more frequently than ten thousand times, and in the process assigns to the data aggregation routine, at least once, output data of another data aggregation routine or of the same data aggregation routine which had been run through previously.

8. The method (39) according to one of the preceding claims, wherein a data aggregation routine is designed to link multiple data from multiple data types and/or
wherein the input data comprise, in particular, the calculation data generated by the evaluation algorithm (44), and in addition
the sequence data (43', 43"),
the evaluation data,
the output data of another data aggregation routine, and/or
the output data of the same data aggregation routine and/or
wherein the at least one data aggregation routine is conceived to link the calculation data to a different data type, in particular to multiply it.

9. A manufacturing system, with
a flatbed machine tool (1) for cutting workpieces (9) out of a material panel (7) according to workpiece-specific cutting contours, and
a remote data processing system and/or a local manufacturing control system configured to execute a method (39) according to one of claims 1 to 8 in order to determine an arrangement of sub-spaces (9A-9F), and to issue the arrangement of sub-spaces (9A-9F) as a control signal to the flatbed machine tool (1) in order to cut out from the material panel (7) work pieces that correspond to the sub-spaces (9A-9F).

10. The manufacturing system of claim 9, wherein the remote data processing system comprises a computation, control, and/or storage device, in particular one at a remote location, preferably anonymized, in which the evaluation data and/or the result data (47', 47") are generated and stored for a plurality of sequence data (43', 43"), advantageously from multiple hundreds or multiple thousands of different sequence data for a nesting, in particular from different users, in particular anonymized.

11. The manufacturing system according to claim 9 or claim 10, wherein the flatbed machine tool (1) is configured for the processing of flat, in particular non-bending, objects such as sheet metal panels, and in particular is designed as a laser processing machine such as a laser cutting machine.

## Revendications

1. Procédé (39) d'imbrication de sous-espaces (9A-9F), dans lequel les sous-espaces (9A-9F) sont agencés dans un espace d'agencement bidimensionnel (23) et délimités par des lignes de contour dans l'espace d'agencement bidimensionnel (23), et dans lequel un sous-espace (9A-9F) est pourvu pour commander un processus de découpe d'une machine-outil à banc plat (1) pour découper une pièce (9) à partir d'une feuille de matériau (7) le long d'au moins une ligne de découpe correspondant à une ligne de contour du sous-espace (9A-9F), moyennant quoi un système de traitement de données à distance et/ou un système de commande de production local met en œuvre les étapes suivantes :
a. la lecture (étape 41) des critères d'évaluation pour un agencement de sous-espaces (9A-9F) imbriqués ;
b. la génération (étape 43) de données de séquence (43') pour l'agencement de sous-espaces (9A-9F) imbriqués, dans lequel les données de séquence (43', 43") comprennent des données qui décrivent une séquence d'imbrication des sous-espaces dans l'espace d'agencement (23) comprenant un nombre prédéterminé de sous-espaces (9A-9F), dans lequel les données comprennent des lignes de contour des sous-espaces (9A-9F), une séquence de découpe des lignes de contour des sous-espaces (9A-9F), des points de référence des sous-espaces (9A-9F) et des chemins de communication entre les lignes de contour ;
c. la génération (étape 45) de données d'évaluation en évaluant les données de séquence (43') avec un algorithme d'évaluation (44) ;
d. la génération (étape 47) de données de résultat (47') sur la base d'une logique combinatoire des données d'évaluation avec les critères d'évaluation ;
e. la génération (étape 49) de données de calcul à partir des données de séquence (43'), des données d'évaluation et des données de résultat (47') en utilisant l'algorithme d'évaluation (44) ;
f. la génération (étape 51) d'autres données de séquence (43") en prenant en compte les données de calcul avec l'algorithme d'évaluation (44) ; et
g. la répétition des étapes c. à f. jusqu'à ce que les données de résultat (47', 47") dépassent une plage prédéterminée,
h. la dérivation (étape 53), à partir des données de séquence (43") générées jusqu'à ce point, d'un agencement de sous-espaces à mettre en œuvre pour un processus de découpe, et mise en œuvre de la séquence de découpe comme résultat du procédé d'imbrication de sous-espaces,
i. la transmission de l'agencement dérivé des sous-espaces sous forme d'un signal de commande à la machine-outil à banc plat (1) pour découper des pièces correspondant aux sous-espaces (9A-9F) dans la feuille de matériau (7),
dans lequel l'algorithme d'évaluation (44), lors de la génération de données d'évaluation, de données de calcul et/ou d'autres données de séquence (43"), exécute au moins une routine d'agrégation de données
i. qui, quand elle est activée, agrège plusieurs données d'entrée en données de sortie,
ii. dans laquelle les données d'entrée comprennent au moins deux des types de données suivants :
les données de séquence (43', 43") lues par l'algorithme d'évaluation,
les données d'évaluation générées par l'algorithme d'évaluation,
les données de calcul générées par l'algorithme d'évaluation,
les données de sortie d'une autre routine d'agrégation de données, et
les données de sortie de ladite routine d'agrégation de données qui a été exécutée précédemment,
iii. dans laquelle les données de sortie affectent au moins l'un des types de données suivants :
les données de séquence (43") générées par l'algorithme d'évaluation,
les données d'évaluation générées par l'algorithme d'évaluation, et
les données de calcul générées par l'algorithme d'évaluation.

2. Procédé (39) selon la revendication 1, dans lequel les critères d'évaluation comprennent des variables associées à l'agencement des sous-espaces, et les variables caractérisent un chevauchement des sous-espaces (9A-9F), des angles relatifs des sections des lignes de contour qui peuvent déclencher une rupture en faisceau pendant le processus de découpe, et/ou une durée à associer au processus de découpe, en particulier en tenant compte des effets thermiques, et
dans lequel les critères d'évaluation peuvent être spécifiés au moins partiellement par un utilisateur, ou peuvent être spécifiés, en variante ou en outre, au moins partiellement par un système de commande, en particulier de niveau supérieur.

3. Procédé (39) selon la revendication 1 ou la revendication 2, dans lequel les données d'évaluation représentent des évaluations des variables associées aux critères d'évaluation.

4. Procédé (39) selon l'une des revendications précédentes, dans lequel les données de résultat comprennent des données qui définissent un paramètre d'amélioration, en particulier une efficacité matérielle de l'agencement des sous-espaces (9A-9F), et une qualité de production des pièces, et
dans lequel la logique combinatoire comprend des étapes qui effectuent une comparaison, une soustraction, une division et/ou une corrélation entre les données d'évaluation et les critères d'évaluation.

5. Procédé (39) selon l'une des revendications précédentes, dans lequel les données de calcul sont associées à des données d'entrée déterminées des routines d'agrégation de données et sont connectées entre elles, en particulier multipliées entre elles, et
dans lequel les données de calcul comprennent des données conçues pour améliorer l'agencement des sous-espaces (9A-9F) imbriqués, en particulier les données d'évaluation et/ou de résultat (47', 47") associées.

6. Procédé (39) selon la revendication 5, dans lequel les données de calcul comprennent des données permettant de déterminer quelles données d'entrée ont un effet, en particulier le plus positif possible, sur les données de résultat et/ou d'évaluation, en particulier afin de régler ensuite les données de calcul associées de telle sorte que la connexion, en particulier par des multiplications, des données de calcul associées aux données d'entrée, conduise à ce que les données de sortie influencent le résultat, en particulier le plus positivement possible, moyennant quoi le résultat peut être amélioré graduellement, et
dans lequel éventuellement une influence des données de calcul sur d'autres données d'évaluation et/ou données de résultat (47', 47") est déterminée.

7. Procédé (39) selon l'une des revendications précédentes, dans lequel l'algorithme d'évaluation (44) exécute plusieurs fois ladite au moins une routine d'agrégation de données, en particulier plus de dix fois, en particulier plus de cent fois, en particulier plus de mille fois, en particulier plus de dix mille fois, et assigne ainsi comme données d'entrée à la routine d'agrégation de données au moins une fois des données de sortie d'une autre routine d'agrégation de données, ou de la même routine d'agrégation de données qui a été exécutée précédemment.

8. Procédé (39) selon l'une des revendications précédentes, dans lequel une routine d'agrégation de données est conçue pour connecter entre elles une pluralité de données comprenant une pluralité de types de données, et/ou
dans lequel les données d'entrée comportent en particulier les données de calcul générées par l'algorithme d'évaluation (44), et en outre
les données de séquence (43', 43"),
les données d'évaluation,
les données de sortie d'une autre routine d'agrégation de données, et/ou
les données de sortie de la même routine d'agrégation de données, et/ou
dans lequel ladite au moins une routine d'agrégation de données est conçue pour connecter entre elles, en particulier multiplier entre elles, les données de calcul d'un autre type de données.

9. Système de fabrication comportant
une machine-outil à banc plat (1) pour la découpe de pièces (9) selon des contours de découpe spécifiques aux pièces à partir d'une feuille de matériau (7), et
un système de traitement de données à distance et/ou un système de commande de production local configuré pour mettre en œuvre un procédé (39) selon l'une quelconque des revendications 1 à 8 pour déterminer un agencement de sous-espaces (9A-9F) et pour fournir l'agencement de sous-espaces (9A-9F) sous forme d'un signal de commande à la machine-outil à banc plat (1) afin de découper des pièces correspondant aux sous-espaces (9A-9F) à partir de la feuille de matériau (7).

10. Système de fabrication selon la revendication 9, dans lequel le système de traitement de données à distance comprend un dispositif de calcul, de commande et/ou de stockage, en particulier spatialement distant, de préférence anonymisé, dans lequel sont générées et stockées, en particulier anonymisées, les données d'évaluation et/ou les données de résultat (47', 47") pour une pluralité de données de séquence (43', 43"), avantageusement parmi plusieurs centaines ou plusieurs milliers de données de séquence différentes pour une imbrication, en particulier provenant de différents utilisateurs.

11. Système de fabrication selon la revendication 9 ou la revendication 10, dans lequel la machine-outil à banc plat (1) est configurée pour l'usinage d'objets plats, en particulier d'objets résistants à la flexion, tels que des panneaux de tôle, et est conçue en particulier comme une machine d'usinage laser, telle qu'une machine de découpe laser.
